# EUROPEAN PATENT SPECIFICATION

(11) **EP 1 561 393 B1**
(45) Date of publication and mention of the grant of the patent: **22.11.2006**
(21) Application number: 05356024.9
(22) Date of filing: 07.02.2005
(51) Int. Cl.: A45D 26/00

(54) **Head of electric depilatory device**
Kopf für elektrisches Epiliergerät
Tête pour appareil électrique d'épilation

(30) Priority: 09.02.2004 KR 2004008203
(43) Date of publication of application: 10.08.2005
(73) Proprietor: Oh, Tae-Jun, Namyangju-shi, 472-864, Gyeonggi-do (KR)
(72) Inventor: Oh, Tae-Jun, Namyangju-shi, 472-864, Gyeonggi-do (KR)
(74) Representative: Maureau, Philippe

(56) References cited:
- EP-A- 0 671 136
- US-A- 5 207 689
- US-A- 5 494 485

## Description

### BACKGROUND OF THE INVENTION

### Field of the Invention

The present invention relates to a head of electric depilatory device, and more particularly to a head of electric depilatory device having a picking out plate to depilate the down of the user, as a tweezers member which is supported by a supporting ring and a fixing ring without a mediate gear so the reduction of assembled part is achieved and it can be easy to product and maintain the head of electric depilatory device.

### Description of the Related Art

In a head of the conventional electric depilatory device, a set of pair of circular tweezers are arranged in such a situation that one end of tweezers is spaced closer or apart to another end of tweezers on a flexible shaft so the down is picked out by a portion of the closer end of tweezers during a depilatory motion.

That is, generally picking out the down is accomplished with two tweezers pushed and spaced to one another in order to grip and pick up the down of the user or cut it when they are moving to contact with a screen plate.

However, there are many cases that the down is not picked up because its weakness although it is pressed by the tweezers. Further, there is a tendency to release the picked up down because of the vibration of depilatory device and the resistance to contact with the skin and the tweezers so good picking out of down cannot be expected.

Also, the conventional head of the depilatory device includes a mediate gear in addition to various parts so the fact is that there are many difficulties in the low cost production and the maintenance of the head.

Prior art is known from EP-A-0671136 and US-A-5494485.

### SUMMARY OF THE INVENTION

As to resolve the conventional problems, it is an object of the present invention to provide a head of electric depilatory device including a motor, a driving gear, a driven gear in the inner of a body comprising:
two rotating drums to be rotated by the rotating force of the motor having a plurality of square inserting holes into each of which a first pushing rod and a second pushing rod are inserted, a plurality of inserting holes formed between the square inserting holes in order to receive a fixing rod and a central hole into which a rotating shaft is inserted;
a plurality of picking out plates having a central hole for the rotation shaft and a plurality of holes into which two pushing rods are inserted;
a support ring located between the center portion of the neighbor picking out plates;
a fixing ring located between the central portion of the set of picking out plates supported by the support ring;
each first pushing rod having a plurality of recesses formed along its longitudinal direction into which a pair of picking out plates are inserted, and a pusher formed at its end to be protruded from the one side of the rotating drum;
each second pushing rod having a plurality of recess formed in correspondence with the recesses of the pushing rod, and a pusher formed at its end to be protruded from the other side of the rotating drum;
a cover having a central hole to be located between the pusher of the pushing rod so that the rotating shaft is penetrated into the central hole; and
two supporting brackets located at the outer side of the rotating drum, each having an arc shaped cam at its upper portion so that the cam contacts with the pushers and pushes the selected pusher into the inward direction of the rotating drum, and having a central hole into which the end of the rotating shaft is inserted.

### BRIEF DESCRIPTION OF THE DRAWINGS

The above objects, and other features and advantages of the present invention will become more apparent after reading the following detailed description when taken in conjunction with the drawings, in which:
Figure 1 is a schematic view illustrating a construction of the conventional electric depilatory device;
Figure 2 is an explored view showing a head of electric depilatory device in accordance with the present invention;
Figure 3 is a perspective view illustrating a construction of driving gear mounted at the head of the present invention;
Figure 4 is a detailed view illustrating the main parts of the head of the present invention;
Figure 5 is an explored view illustrating an assembly of picking out plate of the present invention.

### DETAILED DESCRIPTION OF PREFERRED EMBODIMENTS

Reference will now be made in greater detail to a preferred embodiment of the invention, an example of which is illustrated in the attached drawings. Wherever possible, the same reference numerals will be used throughout the drawings and the description to refer to the same or similar parts.

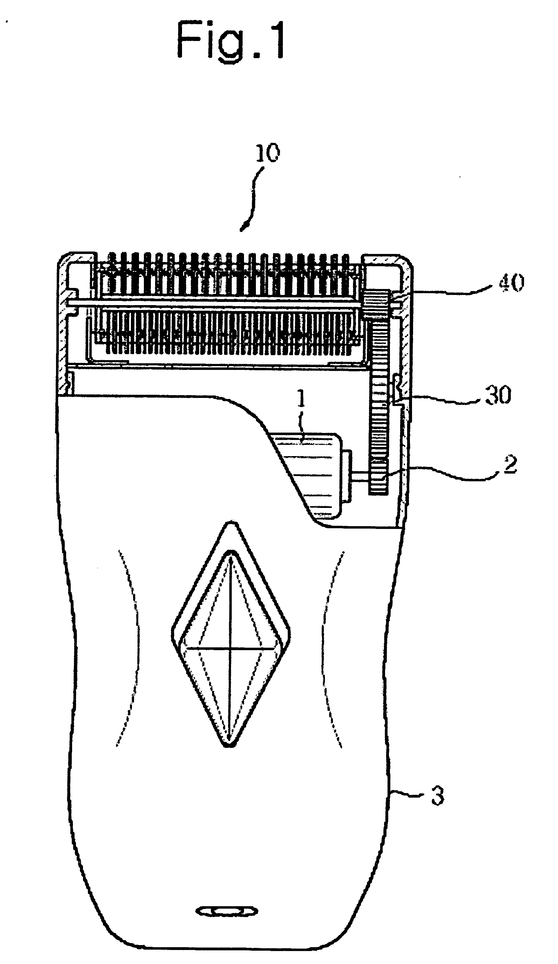

Referring to figure 1, there is shown the conventional electric depilatory device including a motored gear 2 connected to a motor 1, a driven gear 40 connected to a rotating shaft, a driving gear 30 located between the motored gear 2 and the driven gear 40, as well as a head 10 and a body 3.

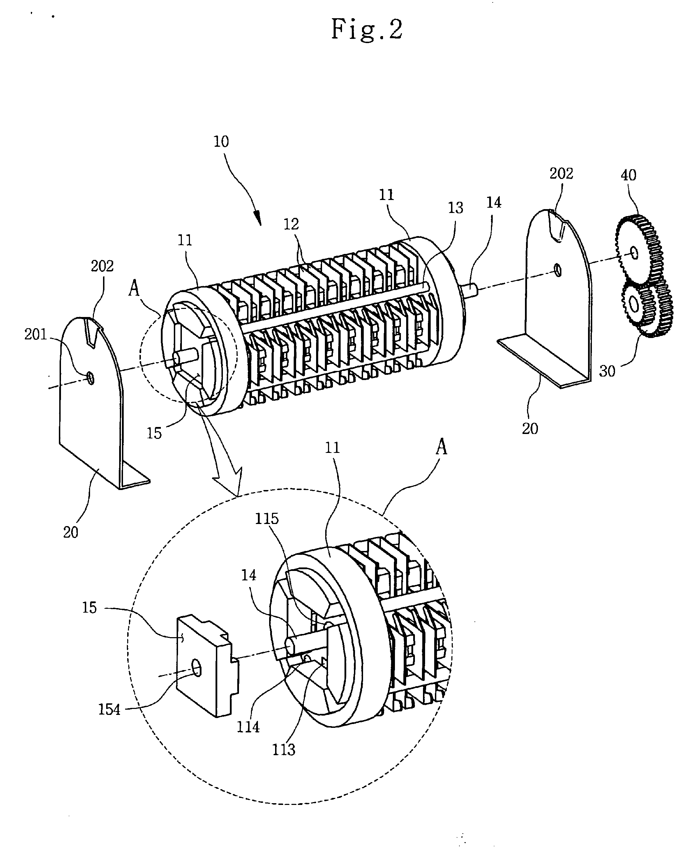

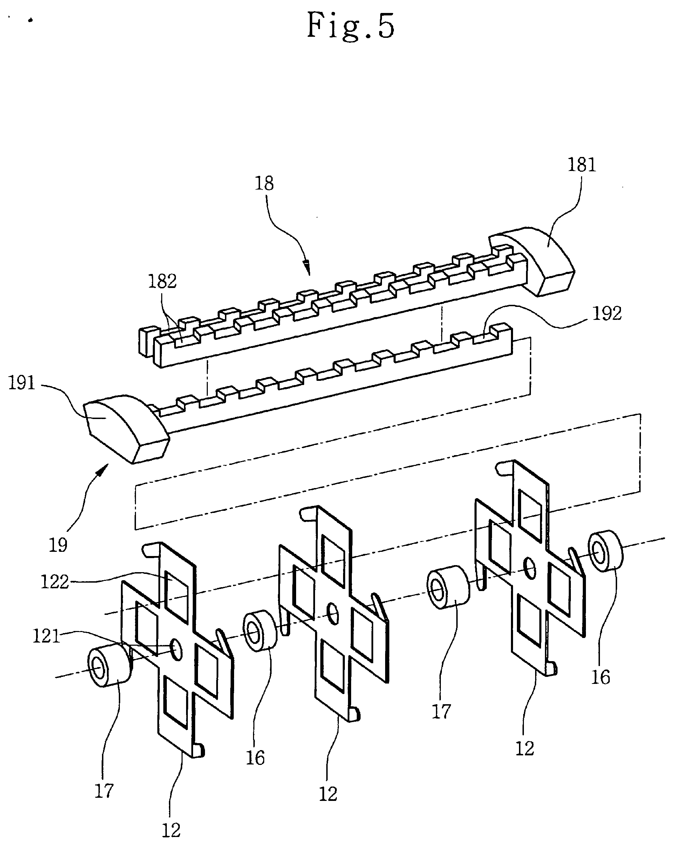

Referring to figure 2, a head of the present invention is shown. The head 10 of the present invention includes two cylindrical rotating drums 11 rotated by the rotating force of motor in the body. In each of the rotating drum, are formed a plurality of square inserting holes 113 into which a first pushing rod 18 or a second pushing rod 19 (shown in Fig. 5) is inserted selectively. Also, a plurality of inserting holes 114 are formed between the inserting holes 113 in order to receive a fixing rod 13. In the center of the rotating drum, is formed a central hole 115 into which a rotating shaft 14 is inserted.

Referring to figure 5, a picking out plate 12 has a central hole 121 and a plurality of holes 122 into which the pushing rods are inserted. Also, a support ring 16 is located between the center portion of the neighbor plates 12 and a fixing ring 17 is located between the central portion of the set of picking out plates 12 supported by the support ring 16.

In the first pushing rod 18, are formed along its longitudinal direction a plurality of recesses 182 into which a pair of picking out plates 12. A pusher 181 is formed at the right end of the first pushing rod 18. The first pushing rod 18 is inserted into the square inserting holes of the picking out plate and the pusher 181 is protruded from the right side of the rotating drum 11.

In the second pushing rod 19, a plurality of recess 192 are formed in correspondence with the recesses 182. A pusher 191 is formed at the left end of the second pushing rod 19. The second pushing rod 19 is inserted into the square inserting holes of the picking out plate and the pusher 191 is protruded from the left side of the rotating drum 11.

Referring to figure 2, the rotating drum 11 is shown with the pushing rods. A cover 15 has a central hole 154 and it is located between the pusher of the pushing rods so that the rotating shaft 14 is penetrated into the hole 154 of the cover.

Two supporting brackets 20 are located at the outer side of the rotating drum 11 and each of the brackets 20 has an arc shaped cam 202 at its upper portion. The cam contacts with the pushers 181 and 191 and pushes the selected pusher in the inward direction of the rotating drum. Also, in each of bracket 20, a central hole 201 is formed so the end of the rotating shaft 14 is inserted into the central hole 201 of the bracket 20.

In the meantime, the driven gear 40 is mounted on the right end of the rotating shaft 14 at the outer of bracket 20 and it is meshed with a driving gear 30.

The head of the present invention is assembled such that a plurality of picking out plates 12 are mounted on the rotating shaft and the rotating drums 11 are mounted at the outer both ends of the rotating shaft so the assembly of the picking out plate and the drum has a cylindrical shape.

When the picking out plates 12 grip the down of the user at a certain location and then the plates 12 are rotating together with the drum 11, the down will be picked up.

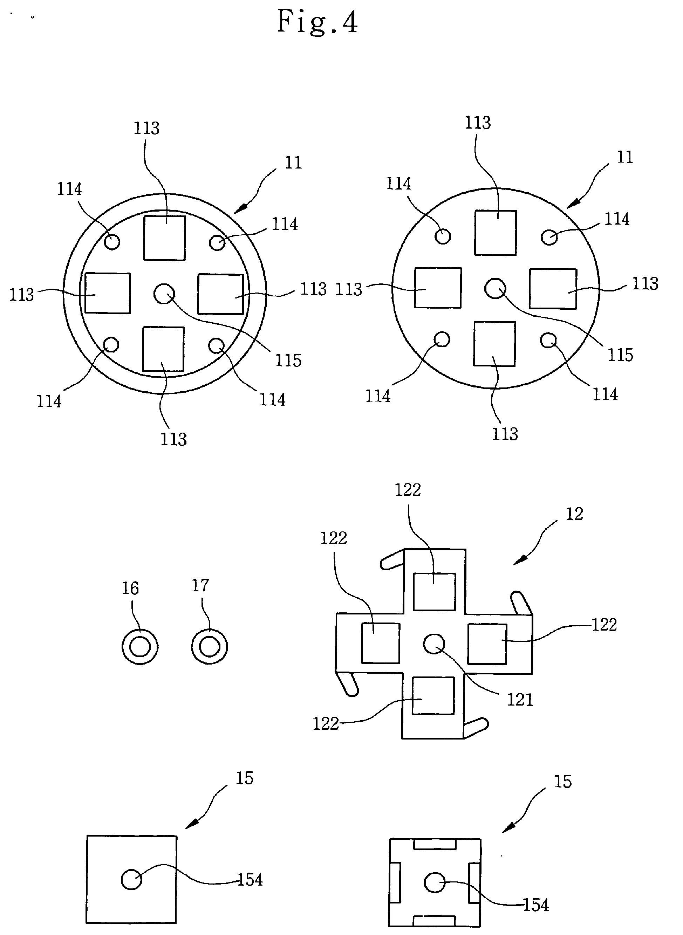

At figure 4, the main parts of the present invention are shown. In the upper of this figure, the both sides of the rotating drum 11 are shown. In the middle of this figure, the support ring 16 and the fixing ring 17 are shown in the left side and the picking out plate 12 is shown in the right side. Also, in the lower of this figure, the both side of the cover 15 are shown.

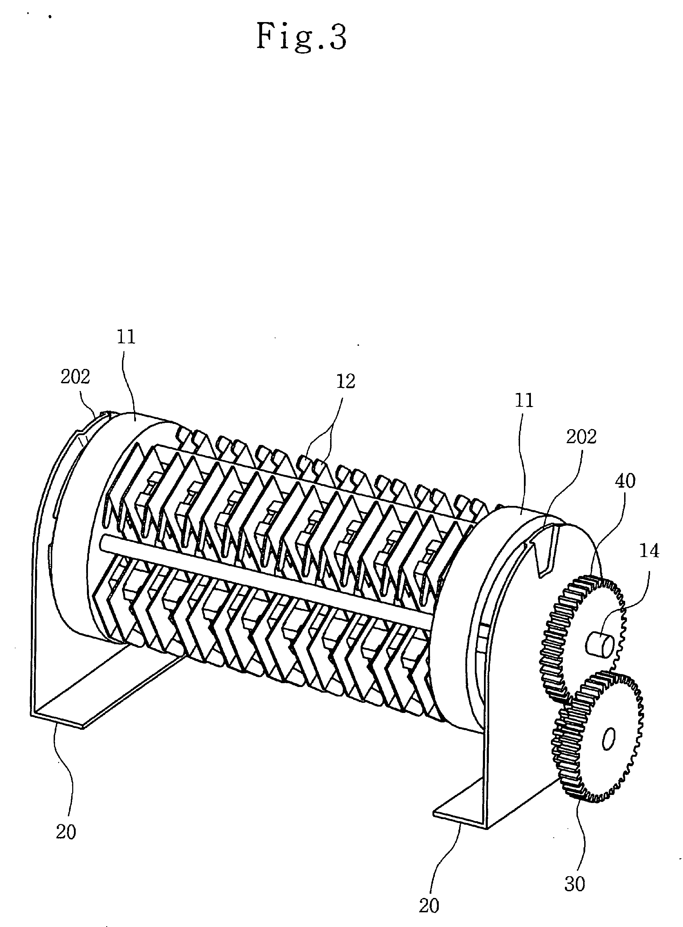

Referring to figure 3, the aspect of the present invention is shown. As different from the conventional head comprising a mediate gear, the head of the present invention has not such a mediate gear. The driven gear 40 is mounted on the rotating shaft 14 at the outer of the bracket 20 having a cam 202 and the rotating force of motor is transmitted to it through the driving gear 30. Therefore, the reduction of the assembled part can be achieved and the maintenance of device is easy.

The operation of the present depilatory device is follows:

In the condition that the picking out plates 12 are separated each other, the user contacts the head 10 to the down in the body so the down is inserted into the space between the picking out plates 12.

Then, he operates to turn on the depilatory device and the rotating drum 11 begins to rotate so the picking out plates 12 are rotated together with the rotating drum 11 in one direction.

According to the rotation of the rotating drum 11, the pushing rods 18 and 19 are rotated together with the picking out plates 12. When the pushing rods 18 and 19 align with the cams 202 of the brackets 20 which are located at the outer side of the drum 11, the pusher 181 of the first pushing rod 18 and the pusher 191 of the second pushing rod 19 are pushed in a central direction by the cams 202 and moved inward in a determined distance.

The movement of the first pushing rod 18 by the cam 202 causes its recesses 182 to be moved in the central direction as the determined distance so one picking out plate 12 in the recess 182 is pushed to neighbor other picking out plate 12 by the shoulder of the recess 182. The moved picking out plate 12 is pressed with a reacting force.

In the meantime, the movement of the second pushing rod 19 by the cam 202 causes its recesses 192 to be moved in the reverse direction of the movement of the pushing rod 18 as the determined distance so other picking out plate 12 is pushed to the neighbor moved picking out plate 12 by the should of the recess 192.

Although the above movement of the pushing rods 18 and 19 is explained one by one, it is noted that the movement is generated simultaneously.

Therefore, in fact, the pushing force by the pushing rods 18 and 19 is maintained at a determined rotating distance by the cams 202 of the both brackets 20 so that the pair of picking out plates 12 can grip the down of the user during this distance.

In accordance with the present invention, the head does not have such a mediate gear as conventional so the reduction of assembled part is achieved and it can be easy to product and maintain the head.

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. An electric depilatory device including a motor (1), a driving gear (30), a driven gear (40) in the inner of a body (3) wherein:
- a head of the electric depilatory device comprising:
- two rotating drums (11) to be rotated by the rotating force of the motor (1) having a plurality of square inserting holes (113) into each of which a first pushing rod (18) and a second pushing rod (19) are inserted, a plurality of inserting holes (114) formed between the square inserting holes (113) in order to receive each a fixing rod (13) and a central hole (115) into which a rotating shaft (14) is inserted;
- a plurality of picking out plates (12) having a central hole (121) for the rotation shaft and a plurality of holes (122) into which the pushing rods (18,19) are inserted;
- a support ring (16) located between the center portion of the neighbor picking out plates (12);
- a fixing ring (17) located between the central portion of the set of picking out plates (12) supported by the support ring (16);
- each first pushing rod (18) having a plurality of recesses (182) formed along its longitudinal direction into which a pair of picking out plates (12) are inserted, and a pusher (181) formed at its end to be protruded from the side of the rotating drum (11);
- each second pushing rod (19) having a plurality of recess (192) formed in correspondence with the recesses (182) and a pusher (191) formed at its end to be protruded from the side of the rotating drum (11);
- a cover (15) having a central hole (154) to be located between the pusher of the pushing rods (18, 19) so that the rotating shaft (14) is penetrated into the central hole (154); and
- two supporting brackets (20) located at the outer side of the rotating drum (11), each having an arc shaped cam (202) at its upper portion so that the cam contacts with the pushers (181, 191) and pushes the selected pusher in the inward direction of the rotating drum, and having a central hole (201) into which the end of the rotating shaft (14) is inserted.

## Patentansprüche

1. Elektrisches Epiliergerät, das einen Motor (1) aufweist, ein Antriebsrad (30), ein angetriebenes Rad (40) innerhalb eines Körpers (3), wobei:
- ein Kopf des elektrischen Epiliergeräts Folgendes aufweist:
- zwei drehende Trommeln (11), die von der Drehkraft des Motors (1) zu drehen sind, der eine Vielzahl quadratischer Einfügeöffnungen (113) hat, in welche jeweils eine erste Schiebestange (18) und eine zweite Schiebestange (19) eingefügt sind, eine Vielzahl von Einfügeöffnungen (114), die zwischen den quadratischen Einfügeöffnungen (113) ausgebildet sind, um jeweils eine Befestigungstange (13) aufzunehmen, und eine Mittenbohrung (115), in welche eine Drehwelle (14) eingefügt ist,
- eine Vielzahl Zupfplatten (12), die eine Mittenbohrung (121) für die Drehwelle haben, und eine Vielzahl von Öffnungen (122), in welche die Schiebestangen (18, 19) eingefügt sind,
- einen Tragring (16), der sich zwischen dem Mittenabschnitt der benachbarten Zupfplatten (12) befindet,
- einen Befestigungsring (17), der sich zwischen dem Mittenabschnitt des Satzes von Zupfplatten (12) gestützt von dem Stützring (16) befindet,
- wobei jede erste Schiebestange (18) eine Vielzahl von Vertiefungen (182) hat, die entlang ihrer Längsrichtung ausgebildet ist, in die ein Paar Zupfplatten (12) eingefügt ist, und einen Schieber (181), der an ihrem Ende ausgebildet ist, um von der Seite der Drehtrommel (11) hervorzuragen,
- wobei jede zweite Schiebestange (19) eine Vielzahl von Vertiefungen (192) hat, die den Vertiefungen (182) entsprechend ausgebildet ist, und einen Schieber (191), der an ihrem Ende ausgebildet ist, um von der Seite der Drehtrommel (11) hervorzuragen,
- eine Abdeckung (15), die eine Mittenbohrung (154) hat, die zwischen dem Schieber der Schiebestangen (18, 19) anzuordnen ist, so dass die Drehwelle (14) in die Mittenbohrung (154) eindringt, und
- zwei Stützträger (20), die sich an der Außenseite der Drehtrommel (11) befinden, die jeweils einen bogenförmigen Nocken (202) an ihrem oberen Abschnitt haben, so dass der Nocken die Schieber (181, 191) berührt und den ausgewählten Schieber nach innen in die Drehtrommel schiebt, und mit einer Mittenbohrung (201), in welche das Ende der Drehwelle (14) eingefügt ist.

## Revendications

1. Dispositif d'épilation électrique comprenant un moteur (1), un mécanisme d'entraînement (30), un mécanisme entraîné (40) à l'intérieur d'un corps (3) dans lequel :
- une tête du dispositif d'épilation électrique comprend :
- deux tambours rotatifs (1) destinés à être tournés par la force de rotation du moteur (1) possédant une pluralité de trous d'insertion carrés (113) dans chacun desquels une première tige de poussée (18) et une seconde tige de poussée (19) sont insérées, une pluralité de trous d'insertion (114) formés entre les trous d'insertion carrés (113) afin de recevoir chacun une tige de fixation (13) et un trou central (115) dans lequel un arbre rotatif (14) est inséré ;
- une pluralité de plaques d'arrachage (12) possédant un trou central (121) pour l'arbre rotatif et une pluralité de trous (122) dans lesquels les tiges de poussée (18, 19) sont insérées ;
- une bague de support (16) située entre les parties centrales des plaques d'arrachage voisines (12) ;
- une bague de fixation (17) située entre les parties centrales de l'ensemble de plaques d'arrachage (12) supportées par la bague de support (16);
- chaque première tige de poussée (18) possédant une pluralité de renfoncements (182) formés le long de sa direction longitudinale, dans lesquels une paire de plaques d'arrachage (12) est insérée, et un poussoir (181) formé au niveau de son extrémité agencé pour faire saillie du côté du tambour rotatif (11) ;
- chaque seconde tige de poussée (19) possédant une pluralité de renfoncements (192) formés en correspondance avec les renfoncements (18) et un poussoir (191) formé au niveau de son extrémité agencé pour faire saillie et devant sortir du côté du tambour rotatif (11) ;
- un capot (15) possédant un trou central (154) agencé pour être situé entre les poussoirs des tiges de poussée (18, 19) de telle sorte que l'arbre rotatif (14) pénètre dans le trou central (154) ; et
- deux pattes de support (20) situées au niveau du côté externe du tambour rotatif (11), possédant chacune une came en forme d'arc (202) au niveau de leur partie supérieure de telle sorte que la came touche les poussoirs (181, 191) et pousse le poussoir sélectionné vers l'intérieur du tambour rotatif, et possédant un trou central (201) dans lequel l'extrémité de l'arbre rotatif (14) est insérée.
